(19) Europäisches Patentamt
European Patent Office
Office européen des brevets

(11) Publication number: **0 320 647 A2**

(12) # EUROPEAN PATENT APPLICATION

(21) Application number: **88119317.1**

(22) Date of filing: **21.11.88**

(51) Int. Cl.4: **C08L 69/00 , //(C08L69/00, 67:02)**

(30) Priority: **16.12.87 US 133858**

(43) Date of publication of application: **21.06.89 Bulletin 89/25**

(84) Designated Contracting States: **DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mt. Vernon Indiana 47620(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

(54) **Polycarbonate composition with low heat distortion.**

(57) Polycarbonate resins are blended with a particular polyester elastomer represented by polycyclohexane dimethylcyclohexanedicarboxylate to reduce heat distortion in articles molded therefrom. Optionally, conventional impact-modifiers are also included in the blends for improvement of impact resistance properties.

EP 0 320 647 A2

Xerox Copy Centre

# POLYCARBONATE COMPOSITION WITH LOW HEAT DISTORTION

## BACKGROUND OF THE INVENTION

### Field of the Invention

The invention relates to synthetic polymeric resin compositions useful for thermoplastic molding and more particularly relates to a moldable blend of aromatic polycarbonates and polyester elastomers.

## BRIEF DESCRIPTION OF THE PRIOR ART

Aromatic polycarbonate resins are a well known class of synthetic polymeric resins, generally prepared by the reaction of a polyhydric phenol with a carbonate precursor; see for example U.S. Patent 3,989,672. These resins, for the most part, are thermoplastic and readily molded under heat to fabricate a wide variety of articles such as automotive parts, tool housings and like structural components. The technique of molding and advantageous moldable compositions comprising the base polycarbonate in admixture with a wide variety of fillers, reinforcing agents, stabilizers, melt-viscosity modifiers, strength and impact modifiers, fire retardants, pigments and like additives are also well known. Representative of such techniques and such moldable compositions are those described in the U.S. Patents 3,431,224 and 4,481,331.

In spite of the numerous thermoplastic polycarbonate molding resin compositions known and available, there has remained a need for thermoplastic resin compositions meeting specific needs and from which articles of specific physical properties may be molded. For example, there is a need for polycarbonate resins which may be molded into engineering structural components having certain thickness specifications, impact resistance and resistance to heat distortion. These articles are of particular need in the automotive industry as components of automobiles.

More particularly, it would be advantageous to provide a polycarbonate resin composition having the advantages described above, as an alternative to known blends of polycarbonate with acrylonitrile-butadiene-styrene or acrylonitrile-styrene-acrylonitrile resins which are currently used to mold certain automotive parts. The compositions of the invention meet this particular need and are notable also for their improved processability.

## SUMMARY OF THE INVENTION

The invention comprises a thermoplastic molding composition, which comprises;
a thermoplastic, aromatic polycarbonate; and
a heat distortion modifying proportion of a polyester elastomer having a Durometer hardness of from 50 to 60 Shore A: an Izod impact strength of more than 800 J/m; a glass transition temperature of 120 to 170° C. and a softening temperature of from 160 to 170° C.

The invention also comprises articles thermoplastically molded from the resins of the invention, such as structural components of automobile vehicles, business machine housings and the like. The articles of the invention exhibit improved low heat distortion and transparency.

## DETAILED DESCRIPTION OF THE PREFERRED EMBODIMENTS OF THE INVENTION

A wide variety of polycarbonate resins are known as are methods of their preparation, which are thermoplastically moldable. These polycarbonate resins may be prepared by the reaction of a polyhydric phenol with a carbonate precursor such as phosgene, a halo-formate or a carbonate ester. The method of preparation is described for example in U.S. Patents 4,001,184 and 4,474,999, both of which are herein

incorporated by reference.

In general, the polycarbonate resins are typified as possessing recurring structural units of the formula:

$$-\!\!\left( O-A-O-\overset{\overset{O}{\|}}{C}- \right)\!\!-$$

wherein A is a divalent aromatic moiety of the polyhydric phenol employed in the polymerization reaction. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis-(4-hydroxyphenyl)propane; hydroquinone; resorcinol; 2,2-bis-(4- hydroxyphenyl)pentane; 2,4′-(dihydroxyphenyl)methane; bis-(2-hydroxyphenyl)methane; bis-(4-hydroxyphenyl)methane; bis- (4-hydroxy-5-nitrophenyl)methane 1,1-bis(4-hydroxyphenyl) ethane; 3,3-bis(4-hydroxyphenyl)pentane; 2,2-dihydroxydiphenyl; 2,6-dihydroxynaphthalene; bis-(4-hydroxydiphenyl) sulfone; bis-(3,5-diethyl-4-hydroxyphenyl)-sulfone; 2,2′-bis- (3,5-dimethyl-4-hydroxyphenyl))propane; 2,4′-dihydroxydiphenyl sulfone; 5′-chloro-2,4′-dihydroxydiphenyl sulfone; bis-(4-hydroxyphenyl)diphenyl sulfone; 4,4′-dihydroxydiphenyl ether; 4,4′-dihydroxy-3,3′dichlorodiphenyl ether; 4,4′-dihydroxy-2,5-dimethyldiphenyl ether; and the like.

A variety of additional dihydric phenols which may be employed to provide such carbonate polymers are disclosed in U.S. Patent No. 2,999,835. It is, of course, possible to employ two or more different dihydric phenols or a dihydric phenol in combination with a glycol, a hydroxy terminated polyester, or a dibasic acid in the event that a carbonate copolymer rather than a homopolymer is desired for use in the preparation of the polycarbonate mixtures of the invention.

The carbonate precursor may be either a carbonyl halide, a diaryl carbonate or a bishaloformate. The carbonyl halides include carbonyl bromide, carbonyl chloride, and mixtures thereof. The bishaloformates suitable for use include the bishaloformates of dihydric phenols such as bischloroformates of 2,2-bis(4-hydroxyphenol)propane, 2,2-bis(4-hydroxy 3,5-dichlorophenol)propane, hydroquinone, and the like, or bishaloformates of glycols such as bishaloformates of ethylene glycol, and the like. While all of the above carbonate precursors are useful, carbonyl chloride, also known as phosgene, is preferred.

Also included within the scope of the present invention are the use of high molecular weight thermoplastic randomly branched polycarbonates. These randomly branched polycarbonates are prepared by coreacting a polyfunctional organic compound with the aforedescribed dihydric phenol and carbonate precursor. Representative of the polyfunctional organic compounds useful in making the branched polycarbonates are those set forth in U.S. Patent Nos. 3,028,365; 3,334,154; 4,001,184; 4,131,575; all of which are hereby incorporated herein by reference thereto.

The polycarbonate resin components of the compositions of the invention are also represented by so-called "end- capped" polycarbonates. More specifically, it is known that in certain procedures of producing aromatic carbonate polymers from dihydric phenols and a carbonate precursor such as phosgene small amounts of certain molecular weight regulators or chain terminators can be used to provide end or terminal groups of the carbonate polymer and thereby control the molecular weight of the polycarbonate.

A molecular weight regulator, i.e.; a chain stopper, is generally added to the reactants prior to or during the contacting of them with a carbonate precursor. Useful molecular weight regulators include, but are not limited to, monohydric phenols such as phenol, chroman-I, paratertiarybutylphenol, p-cumylphenol and the like. Techniques for the control of molecular weight are well known in the art and may be used for controlling the molecular weight of the thermoplastic polycarbonate resins employed as components of the resins of the invention.

The preferred aromatic carbonate polymer is a homopolymer derived from 2,2-bis(4-hydroxyphenyl)-propane (bisphenol A).

Preferably, the polycarbonate resin will have an intrinsic viscosity (as measured in methylene chloride at a temperature of 25° C) ranging from about 0.30 to about 1.40 deciliters/gram.

The polyester component of the compositions of the invention is one selected from elastomers of specific physical properties. More specifically, the elastomer selected is one having the following physical properties:

| Property | ASTM Method | Value |
|---|---|---|
| Specific Gravity | D 792 | 1.1 - 1.2 |
| Durometer Hardness, Shore D/A Scales | D 2240 | 50/90-60/100 |
| Tensile Fracture Strength at 50 cm/min. Crosshead Speed, (MPa) | D 412* | 20 - 30 |
| Elongation at Fracture, (%) | | 300 - 400 |
| Tensile Stress, MPa | | |
| @ 100% Elongation | | 14 - 16 |
| @ 200% Elongation | | 17 - 19 |
| @ 300% Elongation | | 20 - 23 |
| Tension Set After 100% Elongation, (%) | | 50 - 60 |
| Tension Set After Break, (%) | | 180 - 220 |
| Tensile Modulus, MPa at 5 mm/min Crosshead Speed | | 100 - 120 |
| Flexural Modulus, (MPa) | D 790 | 120 - 130 |
| Split Tear Strength, (N/mm) | D 1938 | 80 - 90 |
| Compression Set, Unannealed, (%) (Method B) | D 395 | |
| @ 23° C. | | 35 - 45 |
| @ 70° C. | | 65 - 75 |
| Izod Impact, J/m of notch | D 256 | |
| @ -30° C. | | less than 900 |
| Torsional Modulus Temperature, (° C.) | D 1043 | |
| @ 240 MPa | | -30 - -40 |
| @ 310 MPa | | -35 - -45 |
| @ 930 MPa | | -50 - -60 |
| Water Absorption, 24 h, (%) | D 570 | 0.2 - 0.6 |

* D 412. Die C specimens, which are equivalent to ASTM D 638, Type IV specimens 1.9 mm thick.

In addition, the polyester elastomers have thermal properties as follows:

| Property | ASTM Method | Value |
|---|---|---|
| Flow Rate at 230° C./2160 g., (g/10) | D 1238 | 4 - 20 |
| Crystalline Peak, Melting Point, Tm, (° C) | | 195 - 215 |
| Crystallization Temperature on Cooling Tcc, ° C | | 140 - 160 |
| Glass Transition, Tg, (° C) | | less than 10 |
| Specific Heat, (J/g/° K ° CB) | D 2766 | |
| 25° C - solid | | 1.5 - 1.9 |
| 200° C. - transition | | 3.0 - 3.3 |
| 225° C. - melt | | 3.1 - 3.4 |
| Heat of Fusion, (J/g) | E 793 | 12 - 15 |
| Vicat Softening Temperature, (° C) | D 1525 | 160 - 170 |

Also, the polyester will advantageously have an inherent viscosity as measured at 25° C. in a solution of 60% phenol and 40% trichloroethane (w/w) of from 1.0 to 1.3 dl/g. (determined by Eastman Test Method ECD-A-AL-G-V-I; Eastman Chemical Products, Inc., Kingsport, TN.).

Representative of polyester elastomers meeting the requirements set forth above is a polycyclohexane dimethylcyclohexanedicarboxylate.

Generally, the polycarbonate resin comprises from about 65 to 99 percent by weight of the compositions and the articles of the invention, preferably about 75 to 90 parts, most preferably about 85 to 90 parts. The polyester elastomer may comprise from 1 to about 35 percent by weight of the composition.

The method of the invention may be carried out by a homogeneous blending of the polycarbonate resin with the polyester. The blending may be carried out by adding the two resins together and mixing the two components with conventional technique and apparatus.

In general, the mixtures may be blended by pre-mixing in conventional mixing rolls, dough mixers, Banbury mixers and the like and blending the pre-mix in an extruder or fluxing it on a mill at an elevated temperature sufficient to achieve a homogeneous melt blending. Upon cooling, the blend may be pelletized and stored for use.

The thermoplastic molding resin compositions of the instant invention may also optionally contain various commonly known and used additives such as, for example, antioxidants; antistatic agents; inert fillers such as glass, talc, mica, and clay; ultraviolet radiation absorbers such as the benzophenones, benzotriazoles, and the like; hydrolytic stabilizers such as the epoxides disclosed in U.S. Patent Nos. 3,489,716, 4,138,379 and 3,839,247, all of which are incorporated herein by reference; color stabilizers such as the organophosphites; mold release agents; thermal stabilizers such as a phosphite; and flame retardants.

Some particularly useful flame retardants are the alkali and alkaline earth metal salts of sulfonic acids. These type of flame retardants are disclosed in U.S. Patent Nos. 3,775,367; 3,933,734; 3,931,100; 3,978,024; 3,948,851; 3,926,980; 3,919,167; 3,909,490; 3,953,396; 3,953,300; 3,917,559; 3,951,910 and 3,940,366, all of which are hereby incorporated by reference.

The resin compositions of the invention may be thermoplastically molded using conventional techniques and apparatus; for example by compression, injection, calendering, extrusion and like techniques. An advantage associated with the compositions of the invention is their improved processability by thermoplastic molding techniques. This advantage is due to the lower melt flows, characteristic of the compositions of the invention.

In preferred compositions of the invention (preferred for molding both relatively thick and thin articles), a conventional and known impact modifier for a polycarbonate resin is also added to the compositions of the invention in an impact-modifying proportion, to improve the impact-strength of articles molded from the compositions of the invention.

Representative of known impact modifiers are selectively hydrogenated linear, sequential or radial teleblock copolymers of a vinyl aromatic compound (A) and $(A')_n$ and an olefinic elastomer (B) of the A-B-A'; A $(B\text{-}A\text{-}B)_nA$; A $(B\text{-}A)_nB$; or B $[(A\text{-}B_n)B]_4$ type wherein n is an integer of from 1 to 10, inclusive. These copolymers may be prepared by known methods; see the description given in the U.S. Patent 4,481,331. Commercially available copolymers include for example Kraton G®-1650 and Kraton G®-1651 available from Shell Chemical Company. The Kraton G has a significant quantity of the residual aliphatic unsaturation removed by selective hydrogenation.

Also commercially available are the Solprenes manufactured by Phillips Petroleum Company.

The radial teleblock copolymers of which the Solprenes are typical examples can be characterized as having at least three polymer branches with each branch of the radial block polymer comprising terminal non-elastomeric segments, e.g. (A) and (A') as defined hereinabove. The branches of the radial block polymer contain a terminal non-elastomeric segment attached to an elastomeric polymer segment, e.g., (B) as defined above. These are described in U.S. Patent No. 3,753,936 and in U.S. Patent No. 3,281,383, both of which are incorporated herein by reference, and they are selectively hydrogenated by procedures known per se. In any event, the term "selective hydrogenation" is used herein to contemplate polymers in which the elastomeric blocks (A) and (A') have been left unhydrogenated, i.e., aromatic.

Further examples of impact modifiers advantageously added to the compositions of the invention are the polyolefins and the acrylate copolymers, particularly the core shell polymers such as Rohm and Haas Acryloid KM330; see U.S. Patent No. 4,096,202.

Also useful as impact modifiers are alkenyl aromatic resins. The alkenyl aromatic resin is a polymer having at least a portion of its units derived from an alkenyl aromatic monomer such as styrene, alpha-methylstyrene, p-methylstyrene, tert-butyl styrene, bromo-styrene, chlorostyrene, dimethylstyrene, p-methyl-alpha-methylstyrene, p-chloro-alpha-methylstyrene, vinyl xylene, vinyl naphthalene and vinyl toluene.

Specific examples of alkenyl aromatic monomers include styrene, chlorostyrene, bromostyrene, alphamethylstyrene, vinyl xylene, vinyl naphthalene and p-methyl styrene.

The alkenyl aromatic resin may be modified with a rubber. The term "rubber" as used in this disclosure is meant to encompass both natural and synthetic forms, and to include polyurethane rubber, ethylene/vinyl acetate rubber, silicone rubber, polyether rubber, polypentenamer rubber and ethylene-propylene-diene rubber; diene rubbers, i.e., homopolymers of conjugated dienes having e.g., 4 to 8 carbon atoms, such as butadiene, isoprene, piperylene and chloroprene; and copolymers of dienes with each other or with styrene, acrylic acid, methacrylic acid, or derivatives thereof (e.g., acrylonitrile, methacrylonitrile, acrylic acid, methacrylic acid, butyl acrylate and methyl methacrylate), or isobutylene. Preferably, the rubber is selected from among butadiene, butadiene/styrene, butadiene/methyl methacrylate, butadiene/ butyl acrylate, ethylene/propylene/diene, polypentanamer and butadiene/acrylonitrile rubbers.

An example of another impact modifier for use in the present invention is an EPDM rubber modified polystyrene resin. The term "EPDM" is used in the art to designate rubbery interpolymers of a mixture of monoolefins and a polyene. Preferred types for use in the practice of this invention comprise from about 10 to about 90 mole percent of ethylene, from about 10 to about 90 mole percent of an alpha olefin having 3 to 10 carbon atoms, and from 0.1 to about 10 mole percent of a non-conjugated cyclic or open-chain diene having from 4 to 20 carbon atoms. In the most preferred embodiments, the rubbery interpolymer is derived from ethylene, propylene and a diene selected from 1,4-ethylidene-hexadiene, dicyclopentadiene, and especially, 5-ethylidene-2-norbornene.

The alkenyl aromatic resin that is modified with a rubbery interpolymer may be prepared by dissolving the rubbery interpolymer in the alkenyl aromatic monomer and polymerizing the mixture in the presence of a free radical initiator until 90-100% by weight of the alkenyl aromatic monomer has reacted to form said modified alkenyl aromatic resin. These materials are commercially available, such as the product Taflite 925-01 which is a suspension polymerized EPDM modified, high impact polystyrene that contains about 12% of benzene insoluble rubber and the average rubber particle size is about 8-10 microns. The EPDM component is an ethylene-propylene-ethylidene-norbornene terpolymer.

Rubber modified polystyrenes containing smaller rubber particles may also be used, such as those described in U.S. Patent No. 4,101,504 (EPDM rubber particles having a median diameter of less than about 2 microns).

The preferred modified alkenyl aromatic resins are those made with an EPDM rubbery interpolymer of ethylene, propylene and 5-ethylidene-2-norbornene and styrene. Preferred modified alkenyl aromatic resins will include from about 5 to about 20% by weight of rubber interpolymer.

Further examples of impact modifiers which may be added to the compositions of the invention are copolymers made from an olefin, e.g., ethylene, propylene, or the like, copolymerized with one or more of a comonomer comprising a $C_1$-$C_6$ alkyl acrylate, e.g., methyl acrylate, ethyl acrylate, hexyl acrylate and the like; a $C_1$-$C_6$ alkyl methacrylate, e.g., methyl methacrylate, ethyl methacrylate, hexyl methacrylate, and the like; acrylic acid; or methacrylic acid. Especially preferred are the well known copolymers of ethylene with an alkyl ester of acrylic acid. These are disclosed in U.S. Patent No. 2,953,551. Generally, the acrylate or methacrylate portion of the copolymer can range from about 10 to about 30 weight percent. The olefin portion of the copolymer can range from about 70 to about 90 weight percent. The preferred copolymer is an ethylene-ethyl acrylate copolymer in which the weight ratio of the ethylene fraction to the ethyl acrylate fraction is about 4.5 to 1. Suitable olefin-acrylate copolymers, as defined above, can be prepared by methods well known to those skilled in the art or can be obtained commercially. For example, Union Carbide's Bakelite® DPD-6169 ethylene-ethyl acrylate copolymer is advantageous for use in the present invention.

Still another known impact-modifier useful in the compositions of the invention are the linear low density polyethylenes. They are well known materials, available commercially, e.g. from Exxon under the tradename Escorene® or from Dow Chemicals under the tradename Dowlex®. Alternatively, they may readily be prepared by state of the art polymerization processes such as those described in U.S. Pat. Nos. 4,354,009, 4,076,698, European Patent Application No. 4645 (published 10-17-79), and U.S. Pat. No. 4,128,607, all incorporated herein by reference. These polymers have a density between about 0.89 and about 0.96 gram/cc, preferably between about 0.915 and 0.945 grams/cc. These linear low density polyethylene polymers are actually co-polymers of ethylene and a minor amount, less than 20 mole percent, preferably less than 15 mole %, of an alpha olefin of 3 to 18 carbon atoms, preferably 3 to 10 carbon atoms, most preferably 4 to 8 carbon atoms. These linear low density polyethylenes are distinguishable from polymers such as high pressure low density polyethylene and high density polyethylne made from Zeigler catalyst systems in that they are substantially free of side chain branching, having a controlled concentration of simple side chain branching as opposed to random branching.

The impact modifiers contemplated for use in this invention also include block polysiloxane-polycarbonate copolymers. These block copolymers are generally well known resins as are methods of their preparation; see for example preparative descriptions given in the U.S. Patents 4,027,072, 4,123,588 and 4,569,970. Representative of the polysiloxane- polycarbonate copolymers advantageously employed in the compositions of the invention are those prepared by reacting (A) a halogen chain-stopped polydiorganosiloxane composed of from about 5 to 200 chemically combined diorganosiloxy units consisting essentially of diakylsiloxy units which are connected to each other by silicon-oxygen-silicon linkages wherein each of the silicon atoms has two organo radicals attached through a carbon-silicon bond, and (B) a dihydric phenol having the formula:-(

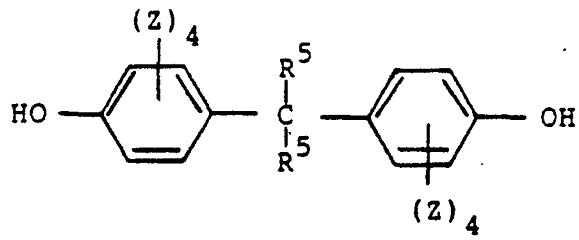

where Z is a member selected from the class consisting of hydrogen, lower alkyl radicals and halogen radicals and combinations thereof, and $R^5$ is a member selected from the class consisting of hydrogen, hydrocarbyl and halogenated hydrocarbyl radicals; and phosgenating the purified reaction product until the resulting copolymer achieves a maximum intrinsic viscosity.

The term "halogen" as used herein is embracive of chlorine, bromine, iodine and fluorine.

The term "hydrocarbyl" as used herein means the monovalent moiety obtained upon removal of a hydrogen atom from a parent hydrocarbon. Representative of hydrocarbyl are alkyl of 1 to 20 carbon atoms, inclusive, such as methyl,ethyl, propyl, butyl, pentyl, hexyl, heptye, octyl, nonyl, undecyl, decyl, dodecyl, tridecyl, tetradecyl, pentadecyl, hexadecyl, heptadecyl, octadecyl, nonodecyl, eicosyl, and isomeric forms thereof; cycloalkyl of 3 to 8 carbon atoms, inclusive, such as cyclopropyl, cyclobutyl, cyclopentyl, cyclohexyl, cycloheptyl, cyclooctyl and the like; alkenyl of 2 to 20 carbon atoms, inclusive, such as vinyl, allyl, butenyl, pentenyl, hexenyl, octenyl, nonenyl, decenyl, undececyl, dodecenyl, tridecenyl, pentadecenyl, octadecenyl, and isomeric forms thereof; aryl such as phenyl, naphthyl and the like; aralkyl of 7 to 20 carbon atoms such as phenmethyl, phenethyl, phenpentyl, phendecyl, phennonodecyl and isomeric forms thereof.

The term "lower alkyl" is used throughout the specification and claims to mean alkyl as previously defined, having 1 to 4 carbon atoms.

Methods for the preparation of these polymers, both commercial and non-commercial, are abundantly described in the literature and known to those skilled in the art.

An impact-modifying proportion of the known impact modifiers described above is generally within the range of from about 0.05 to 15 parts. by weight of the resin composition. preferably at least 2, more preferably 4 parts.

The following examples describe the manner and process of making and using the invention and set forth the best mode contemplated by the inventor for carrying out the invention but are not to be construed as limiting the scope of the invention. All parts are by weight unless otherwise stated. Test results are in accordance with the following test methods.

Intrinsic Viscosity:

The intrinsic viscosity of polycarbonate resins was measured at a temperature of 25°C in methylene chloride and is reported in deciliters/gram (dl/g).

Deflection Temperature Under Load (DTUL):

ASTM test method D-648-56 at a load of 18.6 Kg/cm$^2$.

Notched Izod Impact Strength

ASTM test method D-256; all specimens were 100% ductile at failure, unless otherwise noted.

Tensile Strength and Elongation

ASTM test method D-638.

Flexural Modulus

ASTM test method D-790.

Kaisha Index (KI)

The KI of a resin is a measurement of its melt viscosity and is obtained in the following manner: 7 grams of resin, dried a minimum of 90 minutes at 125° C., are added to a modified Tinius-Olsen model T3 melt indexer; the temperature in the indexer is maintained at 300° C. and the resin is heated at this temperature for 6 or 12 minutes, after 6 or 12 minutes the resin is forced through a 1.04775 mm radius orifice using a plunger of radius 4.7371 mm and applied force of 8.02872 kg.; the time required for the plunger to travel two inches is measured in centiseconds; that is reported as the KI.

EXAMPLE 1 (Control)

A polycarbonate (PC) prepared by the reaction of phosgene and bisphenol-A and having an intrinsic viscosity of from about 0.49 to about 0.52 deciliters/gram (dl/g) (LEXAN® resin 145; General Electric Co., Mount Vernon, IN.) was provided. A representative sample of the resin was extruded at a temperature of circa 250° C. The extrudate was pelletized and the pellets fed to an injection molding machine which molded test bars at a temperature of circa 270° C. The moldings were tested for physical properties as reported in the Table 1 below

EXAMPLE 2-5

A portion of the polycarbonate resin provided in Example 1, supra, was blended with varying proportions of a polyester elastomer (Ecdel 9965, a polycyclohexane dimethylcyclohexanedicarboxylate having an inherent viscosity of 1.05 dl/g. Eastman Chemical Products, Inc., Kingsport, Tn). The elastomer possesses the following physical properties:

| Property, Units | ASTM Method | Value |
|---|---|---|
| Specific Gravity | D 792 | 1.13 |
| Durometer Hardness, Shore D/A Scales | D 2240 | 55/95 |
| Tensile Fracture Strength at 50 cm/min. Crosshead Speed, (MPa) | D 412* | 24 |
| Elongation at Fracture, (%) | | 380 |
| Tensile Stress, MPa | | |
| @ 100% Elongation | | 14.8 |
| @ 200% Elongation | | 17.9 |
| @ 300% Elongation | | 21.7 |
| Tension Set After 100% Elongation, (%) | | 55 |
| Tension Set After Break, (%) | | 200 |
| Tensile Modulus, MPa at 5 mm/min Crosshead Speed | | 110 |
| Flexural Modulus, (MPa) | D 790 | 124 |
| Split Tear Strength, (N/mm) | D 1938 | 85 |
| Compression Set, Unannealed, (%) (Method B) | D 395 | |
| @ 23° C. | | 40 |
| @ 70° C. | | 70 |
| Izod Impact, J/m of notch | D 256 | |
| @ -30° C. | | less than 854 |
| @ -40° C. | | less than 854 |
| Torsional Modulus Temperature, (° C.) | D 1043 | |
| @ 240 MPa | | -37 |
| @ 310 MPa | | -40 |
| @ 930 MPa | | -57 |
| Water Absorption, 24 h, (%) | D 570 | 0.4 |

* D 412, Die C specimens, which are equivalent to ASTM D 638, Type IV specimens were 1.9 mm thick.

| Property | ASTM Method | Value |
|---|---|---|
| Flow Rate at 230° C./2160 g., (g/10) | D 1238 | 20 |
| Crystalline Peak, Melting Point, Tm, (° C) | | 195 - 215 |
| Crystallization Temperature on Cooling Tcc, (° C) | | 150 |
| Glass Transition, Tg, (° C) | | less than 0 |
| Specific Heat, (J/g/° K/° CB) | D 2766 | |
| 25° C - solid | | 1.7 |
| 100° C - solid | | 1.9 |
| 150 ° C - solid | | 2.2 |
| 175° C - solid | | 2.6 |
| 200° C. - transition | | 3.1 |
| 225° C. - melt | | 3.2 |
| Heat of Fusion, (J/g) | E 793 | 13 |
| Thermal Conductivity, (W/m° K) | C 177 | |
| 0° - 50° C. | | 0.25 |
| 50° C - 200° C | | 0.21 |
| Coefficient of Thermal Expansion, mm/mm/° C | D 696 | 15 X $110^{-5}$ |
| Brittleness Temperature, (° C) | D 746 | less than -70 |
| Vicat Softening Temperature, (° C) | D 1525 | 165 |

The mixtures were uniformly blended together in a laboratory tumbler and the blend extruded at 246° C. The extrudate was pelletized and the pellets were fed to an injection molding machine which molded test bars at 271° C. The moldings were subjected to tests to determine their physical properties. The blend

components and the test results are set forth below in the TABLE 1.

TABLE 1

| | EXAMPLES | | | | |
|---|---|---|---|---|---|
| COMPOSITIONS | 1 (Control) | 2 | 3 | 4 | 5 |
| Lexan ® 145 (%) | 100 | 99 | 96 | 90 | 80 |
| ECDEL 9965 (%) | - | 1 | 4 | 10 | 20 |
| PROPERTIES | | | | | |
| Tensile Yield (MPa) | 63.4 | 64.1 | 64.8 | 64.1 | 63.4 |
| Tensile Break (MPa) | 81.4 | 80.6 | 82.0 | 75.1 | 65.5 |
| Tensile Elongation (%) | 120 | 106.6 | 114.7 | 113.8 | 108.6 |
| Flexural Yield (MPa) | 102.0 | 98.6 | 99.9 | 98.6 | 97.2 |
| Flexural Modulus (MPaX$10^3$) | 2.4 | 2.4 | 2.4 | 2.4 | 2.4 |
| DTUL °C @ 1.82 MPa | 133 | 125.6 | 123.7 | 107.7 | 90.9 |
| 3.175mm N. Izod (J/M) | 960 | 940 | 625 | 106.8 | 90.8 |
| 6.35mm N. Izod (J/M) | 112.0 | 101.3 | 90.6 | 74.6 | 58.6 |
| Weld Line (J) | 54 | 54.4 | 51.6 | 43.9 | 41.0 |
| KI (CSEC, 6 min.) | 3030 | 2610 | 2060 | 1440 | 980 |

As may be seen from the data shown in Table 1, an article molded from polycarbonate compositions of the invention exhibits lower DTUL values and melt flows (KI), while impact strength of the thick moldings and weld line strengths are not substantially affected. THe articles molded from the compositions of Examples 2-5 exhibit transparency.

EXAMPLES 6-9

The procedure of Examples 2-5, supra, is repeated except that the Ecdel 9965 as used therein is replaced with Ecdel 9966 (Eastman Chemical Products, Inc., supra) which differs in that it has an inherent viscosity of 1.16 dl/g and a flow rate of 10g/10 minutes. The test results are shown in the TABLE 2, below.

TABLE 2

| | EXAMPLES | | | |
|---|---|---|---|---|
| COMPOSITIONS | 6 | 7 | 8 | 9 |
| Lexan ® 145 (%) | 99 | 96 | 90 | 80 |
| ECDEL 9966 (%) | 1 | 4 | 10 | 20 |
| PROPERTIES | | | | |
| Tensile Yield (MPa) | 63.4 | 64.1 | 64.1 | 62.7 |
| Tensile Break (MPa) | 87.6 | 77.2 | 79.6 | 70.3 |
| Tensile Elongation (%) | 118 [illegible] | 102.7 | 113.0 | 113.7 |
| Flexural Yield (MPa) | 99.9 | 99.9 | 100.6 | 96.5 |
| Flexural Modulus (MPa x $10^3$) | 2.5 | 2.4 | 2.5 | 2.3 |
| DTUL °C @ 1.82 MPa | 125.8 | 122.1 | 110.4 | 89.0 |
| 3.175mm N. Izod (J/M) | 976 | 475 | 106.6 | 90.6 |
| 6.35mm N. Izod (J/M) | 106.6 | 90.6 | 74.6 | 53.3 |
| Weld Line (J) | 54.4 | 52.1 | 46.3 | 39.7 |
| KI (CSEC, 6 min.) | 2880 | 2280 | 1920 | 1240 |

Articles molded from the compositions of the Examples 6-9 exhibit transparency.

EXAMPLES 10-13

The procedure of Example 2-5, supra, is repeated except that the Ecdel 9965 as used therein is replaced with proportions of Ecdel 9967 (Eastman Chemical Products, Inc., supra.) which differs in that it has an inherent viscosity of 1.23 and a flow rate of 4g/10 min. the test results are given in the TABLE 3, below.

TABLE 3

| | EXAMPLES | | | |
|---|---|---|---|---|
| COMPOSITIONS | 10 | 11 | 12 | 13 |
| Lexan ® 145 (%) | 99 | 96 | 90 | 80 |
| ECDEL 9967 (%) | 1 | 4 | 10 | 20 |
| PROPERTIES | | | | |
| Tensile Yield (MPa) | 63.4 | 64.1 | 64.8 | 63.4 |
| Tensile Break (MPa) | 90.3 | 82.7 | 75.8 | 75.1 |
| Tensile Elongation (%) | 123.1 | 114.2 | 108.5 | 117.6 |
| Flexural Yield (MPa) | 97.9 | 99.9 | 100.6 | 96.5 |
| Flexural Modulus (MPa x $10^3$) | 2.4 | 2.5 | 2.4 | 2.3 |
| DTUL °C @ 1.82 MPa | 129.4 | 122.0 | 104.6 | 96.2 |
| 3.175mm N. Izod (J/M) | 965 | 650 | 112 | 90.6 |
| 6.35mm N. Izod (J/M) | 96 | 90.6 | 74.6 | 58.6 |
| Weld Line (J) | 54.4 | 51.7 | 45.2 | 42.4 |
| KI (CSEC, 6 min.) | 2930 | 2450 | 1800 | 1550 |

The articles molded from the compositions of Examples 10-13 exhibit transparency.

EXAMPLES 14-19

The procedure of EXAMPLES 2-13, inclusive is repeated except that the proportions of Ecdel® as used therein are restricted to 10 parts and the impact modifier is supplemented with varying proportions of linear low density polyethylene resin (LLDPE) provided by Exxon, Houston, TX. under the trade name Escorene® LPX-15. The test results are shown below in the TABLE 4.

TABLE 4

| | EXAMPLES | | | | | |
|---|---|---|---|---|---|---|
| COMPOSITION (%) | 14 | 15 | 16 | 17 | 18 | 19 |
| Lexan ® 145 (%) | 0 | 0 | 90 | 90 | 90 | 90 |
| ECDEL 9965 (%) | 10 | 10 | -- | -- | -- | -- |
| ECDEL 9966 | -- | -- | 10 | 10 | -- | -- |
| ECDEL 9967 | -- | -- | -- | -- | 10 | 10 |
| LLDPE | 0.5 | 2 | 0.5 | 2 | 0.5 | 2 |
| PROPERTIES | | | | | | |
| Tensile Yield (MPa) | 63.4 | 61.4 | 63.4 | 61.4 | 63.4 | 61.4 |
| Tensile Break (MPa) | 80.6 | 79.2 | 80.6 | 79.2 | 79.2 | 79.6 |
| Tensile Elongation (%) | 115.3 | 117.2 | 114.0 | 114.5 | 116.5 | 120.7 |
| Flexural Yield (MPa) | 97.9 | 94.5 | 98.6 | 94.5 | 97.2 | 93.8 |
| Flexural Modulus (MPa x $10^3$) | 2.3 | 2.3 | 2.3 | 2.3 | 2.3 | 2.3 |
| DTUL °C @ 1.82 MPa | 109.4 | 108.2 | 108.6 | 108.4 | 107.9 | 111.4 |
| 3.175mm N. Izod (J/M) | 122.8 | 833 | 138.5 | 881 | 112 | 860 |
| 6.35mm N. Izod (J/M) | 85.4 | 128.2 | 90.8 | 128.2 | 80.1 | 122.8 |
| Weld Line (J) | 42.9 | 34.7 | 42.9 | 34.8 | 44.3 | 36.0 |
| KI (CSEC, 6 min.) | 1600 | 1560 | 1890 | 1710 | 1910 | 1660 |

EXAMPLES 20-23

The procedure of Examples 1-5 supra., was repeated, except that the polyester elastomer (Ecdel 9965) or used therein was replaced first with Ecdel 9966 (EXAMPLE 22) and then with Ecdel 9967 (EXAMPLE 23) and 5 weight percent of a supplementary impact-modifier was also added. The Ecdel 9966 and Ecdel 9967 (Eastman Chemical Co., supra.) differ from Ecdel 9965 in respect to inherent viscosity and flow rate at 230° C. (Ecdel 9966 = 10g/10 min.; Ecdel 9967 = 4 g/10 min.). The physical properties of the product blends are set forth in the TABLE 5, below. The Example 20 serves as a control.

TABLE 5

| | EXAMPLES | | | |
|---|---|---|---|---|
| COMPOSITIONS | 20 (CONTROL) | 21 | 22 | 23 |
| Lexan 145 (%) | 95 | 90 | 90 | 90 |
| ECDEL 9965 (%) (I.V. 1.05) | -- | 5 | -- | -- |
| ECDEL 9966 (%) (I.V. 1.16) | -- | -- | 5 | -- |
| ECDEL 9967 (%) (I.V. 1.23) | -- | -- | -- | 5 |
| KM330 (%)* | 5 | 5 | 5 | 5 |
| PROPERTIES | | | | |
| Tensile Yield (MPa) | 58.6 | 58.6 | 59.3 | 59.3 |
| Tensile Break (MPa) | 83.4 | 79.3 | 77.9 | 79.9 |
| Tensile Elongation (%) | 116 | 115 | 112 | 117 |
| Flexural Yield (MPa) | 89.6 | 90.3 | 90.3 | 90.3 |
| Flexural Modulus ($MPa x 10^3$) | 2.2 | 2.2 | 2.2 | 2.2 |
| DTUL °C @ 1.82 MPa | 128 | 118.4 | 120.3 | 119.8 |
| 3.175mm N. Izod (J/M) | 875 | 896 | 896 | 875 |
| 3.175mm N. Izod (J/M) aged at 125°C, 24 hrs. | 810 | 810 | 795 | 816 |
| 6.35mm N. Izod (J/M) | 800 | 779 | 773 | 773 |
| Weld Line (J) | 51.8 | 50.8 | 50.8 | 50.3 |
| KI (CSEC, 6 min.) | 3510 | 2435 | 2410 | 2525 |
| KI (CSEC, 12 min.) | 3170 | 1930 | 2055 | 2000 |

* Acryloid ® KM330; an acrylate copolymer prepared as described in U.S. Patent 4,096,202; Rohm and Haas Corporation.

EXAMPLES 24-27

The procedure of EXAMPLES 20-23, supra., is repeated except that the proportion of the impact modifiers is changed. The proportion employed and the physical properties of the blends obtained are shown on the TABLE 6, below. The Example 27 is a control for comparison.

TABLE 6

| | EXAMPLES | | | |
|---|---|---|---|---|
| COMPOSITIONS | 24 | 25 | 26 | 27(Control) |
| Lexan 145 (%) | 90 | 90 | 90 | 100 |
| ECDEL 9965 (%) | 10 | -- | -- | -- |
| ECDEL 9966 (%) | -- | 10 | -- | -- |
| ECDEL 9967 (%) | -- | -- | 10 | -- |
| KM330, SUPRA., (phr) | 4 | 4 | 4 | -- |
| R538 (PHR)* | 0.3 | 0.3 | 0.3 | 0.3 |
| PROPERTIES | | | | |
| Tensile Yield (MPa) | 62.0 | 62.0 | 62.0 | 63.4 |
| Tensile Break (MPa) | 77.2 | 73.7 | 80.6 | 81.4 |
| Tensile Elongation (%) | 115 | 117 | 122 | 120 |
| Flexural Yield (MPa) | 95.1 | 95.1 | 95.8 | 102.0 |
| Flexural Modulus (MPax$10^3$) | 2.33 | 2.33 | 2.33 | 2.4 |
| DTUL °C @ 1.82 MPa | 109.6 | 105.2 | 111.5 | 133 |
| 3.175mm N. Izod (J/M) | 880 | 890 | 880 | 960 |
| 3.175mm N. Izod (J/M) aged at 125°C, 24 hrs. | 789 | 789 | 853 | 853 |
| 6.35mm N. Izod (J/M) | 298 | 352 | 475 | 112 |
| Weld Line (J) | 50.6 | 50.9 | 49 | 54 |
| KI (CSEC, 6 min.) | 2120 | 1810 | 2170 | 3030 |

* pentaerythritoltetrastearate

EXAMPLES 28-31

The procedure of EXAMPLE 24-27, supra., is repeated, except that in Examples 28-31 a proportion of a second supplementary impact modifier is added. The composition and the test results are shown in TABLE 7, below. Example 31 serves as a control.

TABLE 7

| | EXAMPLES | | | |
|---|---|---|---|---|
| COMPOSITIONS | 28 | 29 | 30 | 31(Control) |
| Lexan ® 145 (%) | 90 | 90 | 90 | 90 |
| ECDEL 9965 (%) | 10 | -- | -- | -- |
| ECDEL 9966 (%) | -- | 10 | -- | -- |
| ECDEL 9967 (%) | -- | -- | 10 | -- |
| KM330, SUPRA., (phr) | 4 | 4 | 4 | 10 |
| LLDPE (phr)* | 2 | 2 | 2 | -- |
| PROPERTIES | | | | |
| Tensile Yield (MPa) | 59.9 | 59.3 | 59.9 | 57.2 |
| Tensile Break (MPa) | 75.8 | 71.0 | 75.2 | 73.7 |
| Tensile Elongation (%) | 116.6 | 103.6 | 114.0 | 114.3 |
| Flexural Yield (MPa) | 90.3 | 89.6 | 89.6 | 84.8 |
| Flexural Modulus ($MPa x 10^3$) | 2.1 | 2.1 | 2.1 | 2.0 |
| DTUL (°C @ 1.82 MPa) | 110.5 | 112.2 | 111.2 | 110.3 |
| 3.175mm N. Izod (J/M) | 837 | 858 | 858 | 837 |
| 3.175mm N. Izod (J/M) aged at 125°C, 24 hrs. | 793 | 778 | 793 | 746 |
| 6.35mm N. Izod (J/M) | 661 | 672 | 682 | 693 |
| Weld Line strength (J) | 37.5 | 36.7 | 36.7 | 46.3 |
| KI (CSEC, 6 min.) | 1560 | 1545 | 1770 | 1830 |

* linear low density polyethylene, a copolymer of ethylene and butene-1; Escorene ® LPX-15, Exxon Corp.

EXAMPLES 32-37

The procedure of EXAMPLES 28-31, supra., is repeated except that in EXAMPLES 32-37 a proportion of a different supplementary impact-modifier is added. The composition and the test results are shown below in TABLE 8.

TABLE 8

| | EXAMPLES | | | | | |
|---|---|---|---|---|---|---|
| COMPOSITION | 32 | 33 | 34 | 35 | 36 | 37 |
| Lexan ® 145 (%) | 85 | 85 | 85 | 85 | 85 | 85 |
| ECDEL 9965 (%) | 10 | -- | -- | 10 | -- | -- |
| ECDEL 9966 (%) | -- | 10 | -- | -- | 10 | -- |
| ECDEL 9967 (%) | -- | -- | 10 | -- | -- | 10 |
| DPD6169 (%)* | 5 | 5 | 5 | -- | -- | - |
| KM330, supra., (%) | -- | -- | -- | 5 | 5 | 5 |
| PROPERTIES | | | | | | |
| Tensile Yield (MPa) | 59.3 | 57.9 | 57.9 | 60.7 | 59.9 | 59.9 |
| Tensile Break (MPa) | 75.1 | 70.3 | 77.9 | 75.1 | 73.7 | 75.8 |
| Tensile Elongation (%) | 110.7 | 103.8 | 123.0 | 111.3 | 105.7 | 113.3 |
| Flexural Yield (MPa) | 89.6 | 89.6 | 89.6 | 91.0 | 90.3 | 90.3 |
| Flexural Modulus (MPa x $10^3$) | 2.1 | 2.1 | 2.1 | 2.2 | 2.2 | 2.2 |
| DTUL °C @ 1.82 MPa | 115.9 | 107.3 | 110.7 | 108.6 | 108.5 | 105.8 |
| 3.175mm N. Izod (J/M) | 816 | 779 | 789 | 890 | 901 | 896 |
| 3.175mm N. Izod (J/M) aged at 25°, 24 hrs. | 618 | 640 | 635 | 793 | 779 | 827 |
| 6.35mm N. Izod (J/M) | 661 | 661 | 650 | 635 | 693 | 704 |
| Weld Line (J) | 26.9 | 12.8 | 15.1 | 44.0 | 44.0 | 45.6 |
| KI (CSEC, 6 min.) | 1840 | 1790 | 1720 | 1930 | 2040 | 2140 |

* Ethylene-ethyl acrylate copolymer; Union Carbide, Bakelite R DPD-6169.

## Claims

1. A thermoplastic molding composition, which comprises;
a thermoplastic, aromatic polycarbonate; and a heat distortion modifying proportion of a polyester elastomer having a durometer hardness of from 50 to 60 Shore A; an Izod impact strength of more than 800 J/m; a glass transition temperature of 120 to 170° C. and a softening temperature of from 160 to 170° C.

2. The composition of claim 1 wherein the polycarbonate is a homopolymer reaction product of bisphenol-A and phosgene.

3. The composition of claim 1 wherein the elastomer is polycyclohexane dimethylcyclohexanedicarboxylate.

4. The composition of claim 1 wherein the polycarbonate comprises from 65 to 99 percent by weight of the composition and the elastomer comprises from 1 to 35 percent by weight of the composition.

5. The composition of claim 1 which further comprises an impact-modifying proportion of an impact-modifying agent.

6. The composition of claim 5 wherein the agent is linear low density polyethylene.

7. The composition of claim 5 wherein the agent is an acrylate copolymer of an olefin.

8. An article molded from the composition of claim 1.